# EUROPEAN PATENT APPLICATION

(11) **EP 4 760 935 A1**
(43) Date of publication of application: **17.06.2026**
(21) Application number: 25772335.3
(22) Date of filing: 24.02.2025
(51) Int. Cl.: H01M 50/291, H01M 50/383, H01M 50/317, H01M 50/249

(54) **BATTERY MODULE, BATTERY PACK AND VEHICLE INCLUDING SAME**

(30) Priority: 13.03.2024 KR 20240035410
(71) Applicant: LG Energy Solution, Ltd., Seoul 07335 (KR)
(72) Inventor: LEE, Joo-Hyoung, Daejeon 34122 (KR); PARK, Min-Soo, Daejeon 34122 (KR)
(74) Representative: Plasseraud IP
(86) International application number: PCT/KR2025/002554
(87) International publication number: WO 2025/192896

(57) **Abstract**

The present disclosure relates to a battery module including: a plurality of battery cells; a barrier configured to partition the plurality of battery cells; and a module case configured to store the plurality of battery cells and the barrier, and having a protrusion formed to protrude toward the barrier from at least a portion of one side thereof.

## Description

### TECHNICAL FIELD

The present disclosure relates to a battery module, and a battery pack and vehicle including the same. Specifically, the present disclosure relates to a battery module capable of suppressing thermal propagation inside the battery module, and a battery pack and vehicle including the same.

This application is based on and claims priority from Korean Patent Application No. 10-2024-0035410, filed on March 13, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate when they are used at a temperature higher than an appropriate temperature, and if the heat fails to be controlled to an appropriate temperature, unexpected ignition or explosion is more likely to occur. In addition, since the battery module has a structure in which the battery cells are intensively stored inside a module housing. Accordingly, if a thermal event occurs in a battery cell, high-temperature gas or flames emitted from the battery cell may spread to adjacent battery cells, causing a chain reaction of explosions in the battery cells, which is very dangerous.

Therefore, it is necessary to develop a structure capable of suppressing and delaying thermal propagation by clearly separating the battery cells, thereby preventing, even if a thermal event occurs in some battery cells inside the battery module, the high-temperature gas or flames from spreading to other battery cells inside the battery module and causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by clearly separating the battery cells.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a barrier configured to partition the plurality of battery cells; and a module case configured to store the plurality of battery cells and the barrier, and having a protrusion formed to protrude toward the barrier from at least a portion of one side thereof.

The module case may include a case body having an upper opening, and a top plate configured to cover the upper opening of the case body, and having the protrusion formed on a lower surface thereof.

The protrusion may be configured to extend along a longitudinal direction of the barrier.

The barrier may be configured to extend further outward than the battery cell.

The protrusion may be configured to come into contact with the barrier.

As the protrusion comes into contact with the barrier, a sealed space may be formed by the adjacent barriers, the protrusions, and the module case.

The protrusion may be configured such that its lower surface is in contact with the barrier.

The protrusion may be configured such that an end of the barrier is inserted thereinto.

The protrusion may be configured such that its side surface is in contact with the barrier.

A venting hole may be formed on a side of the module case where the protrusion is located.

A plurality of venting holes may be provided, and the protrusion may be provided between the adjacent venting holes.

The battery module may further include a cover member configured to cover the venting holes and to be at least partially openable by the venting gas.

The cover member may have a notched portion provided at a position corresponding to the venting hole.

In another aspect of the present disclosure, there is provided a battery pack including at least one battery module according to the present disclosure.

In another aspect of the present disclosure, there is provided a vehicle including at least one battery pack according to the present disclosure.

### Advantageous Effects

According to one aspect of the present disclosure, it is possible to reliably partition and separate battery cells inside a battery module by protrusions, thereby preventing flames, foreign substances, high-temperature gases, and the like from moving between the battery cells.

That is, according to the above aspect of the present disclosure, even if a thermal event occurs in some battery cells inside a battery module, it is possible to effectively prevent or delay gas or flames from propagating to other battery cells inside the battery module and causing thermal runaway. Therefore, the safety and reliability of the battery module can be ensured.

According to another aspect of the present disclosure, since high-temperature gas or flames generated from battery cells inside a battery module can be smoothly discharged to the outside of the battery module, it is possible to prevent or delay the propagation of thermal runaway due to an increase in the internal pressure of the battery module.

In particular, according to the above aspect of the present disclosure, since a sealed space is formed by protrusions, the internal pressure of the battery cell where a thermal event occurred can be increased, thereby preferentially discharging venting gas or flames through the venting hole of the battery cell where the thermal event occurred. This may shorten the time during which high-temperature venting gas or flames remain around the battery cell area where a fire occurred inside the battery module.

According to another aspect of the present disclosure, it is possible to prevent or delay events, such as fire or explosion, resulting from thermal runaway in the battery pack including a plurality of battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view taken along line I - I' in FIG. 1.
FIG. 4 is a bottom perspective view of a top plate included in a battery module according to an embodiment of the present disclosure.
FIG. 5 is a cross-sectional view of a battery module when viewed from above according to an embodiment of the present disclosure.
FIG. 6 is an enlarged view of part A in FIG. 3, which illustrates a structure of a protrusion included in a battery module according to an embodiment of the present disclosure.
FIG. 7 is a drawing illustrating a structure of a protrusion included in a battery module according to another embodiment of the present disclosure.
FIG. 8 is a drawing illustrating a structure of a protrusion included in a battery module according to another embodiment of the present disclosure.
FIG. 9 is a drawing illustrating a structure of a protrusion included in a battery module according to another embodiment of the present disclosure.
FIGS. 10 and 11 are drawings illustrating a structure of a protrusion included in a battery module according to another embodiment of the present disclosure.
FIGS. 12 and 13 are drawings illustrating a structure of a protrusion included in a battery module according to another embodiment of the present disclosure.
FIG. 14 is a drawing illustrating a cover member included in a battery module according to another embodiment of the present disclosure.
FIG. 15 is a cross-sectional view of a battery module according to another embodiment of the present disclosure.
FIG. 16 is a drawing illustrating a state where a cover member is opened when a thermal event occurs in a battery module according to another embodiment of the present disclosure.
FIG. 17 is a schematic perspective view of a battery pack including a battery module according to an embodiment of the present disclosure.
FIG. 18 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction, i.e., a longitudinal direction of the battery cell, perpendicular to the X-axis direction on the horizontal plane X-Y plane, and the Z-axis direction may indicate an up-down direction (vertical direction), i.e., a height direction of the battery cell, perpendicular to both the X-axis direction and the Y-axis direction.

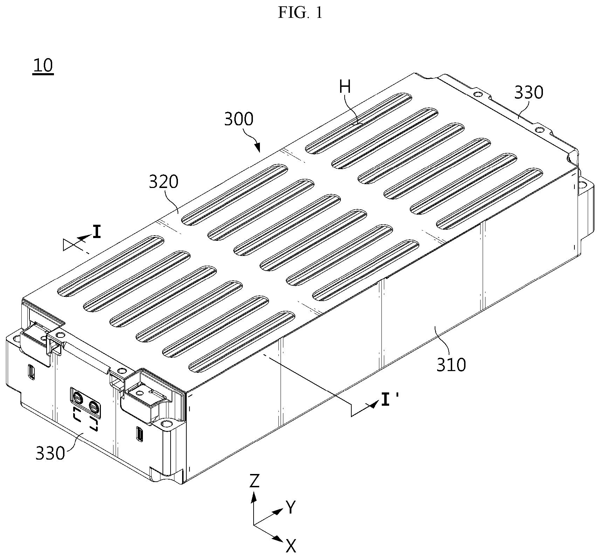

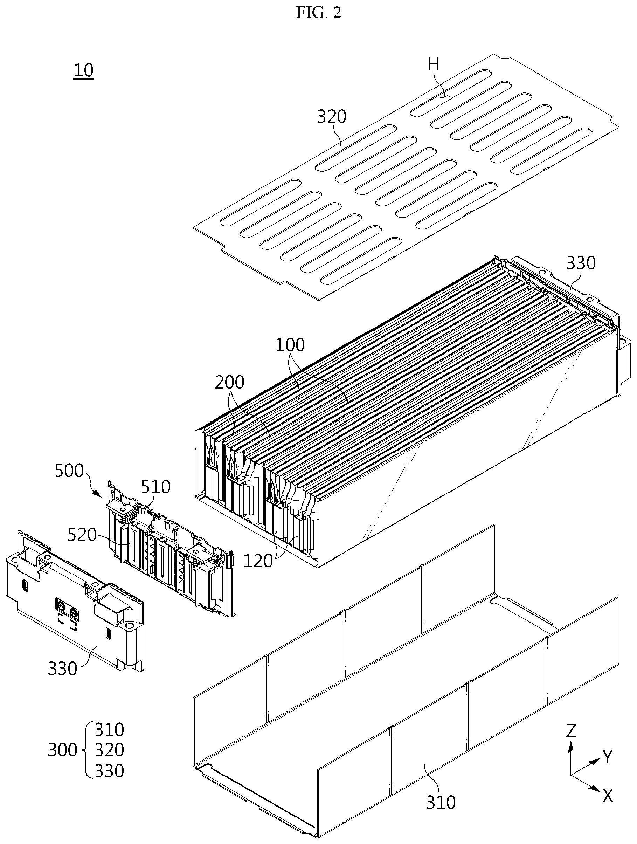

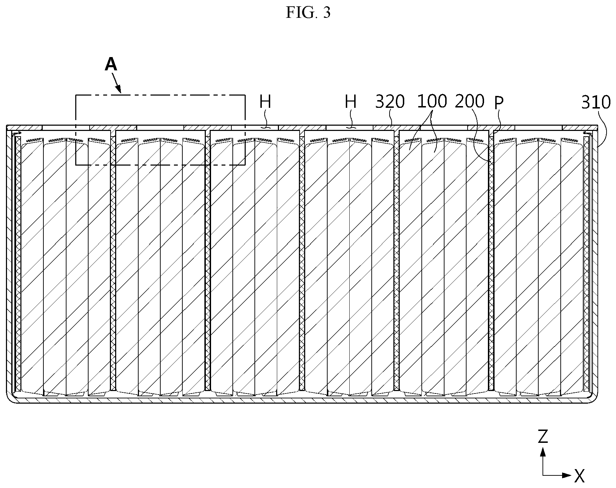

FIG. 1 is a perspective view of a battery module according to an embodiment of the present disclosure, FIG. 2 is an exploded perspective view of a battery module according to an embodiment of the present disclosure, and FIG. 3 is a cross-sectional view taken along line I - I' in FIG. 1.

Referring to FIGS. 1 to 3, a battery module 10 according to an embodiment of the present disclosure may include a battery cell 100, a barrier 200, and a module case 300.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

The battery cell 100 may be a pouch-type secondary battery. The battery cell 100 may include an electrode assembly and a cell case 110 that stores the electrode assembly. The cell case 110 may store the electrode assembly in a receiving portion, and the edges of the receiving portion may be heat-fused to form a sealing portion. The sealing portions may be provided on three of four edges of the battery cell 100.

In addition, each of the plurality of battery cells 100 may have an electrode lead 120. The electrode lead 120 may be connected to the electrode assembly, and may extend to the outside of the cell case 110, functioning as an electrode terminal.

A pair of electrode leads 120 may be provided, and the pair of electrode leads 120 may extend outward from both ends of the battery cell 100, for example, in the longitudinal direction (±Y directions). In this case, the pair of electrode leads 120 may be a positive electrode lead and a negative electrode lead. The battery cell 100 may be configured such that two electrode leads 120 are located only at one end in the Y-axis direction, for example, at the end in the +Y-axis direction, as necessary.

The battery cell 100 may be provided to stand with the edge that does not include the sealing portion facing downward. As illustrated in FIG. 2, the plurality of battery cells 100 may be disposed side by side in a left-right direction (X-axis direction) while standing in a vertical direction (Z-axis direction). In this case, each battery cell 100 may have the sealing portions facing the front-back direction (Y-axis direction) and the upward direction (+Z-axis direction), and the receiving portion facing the left-right direction (X-axis direction). In the case where the battery cell 100 is disposed as described above, it is easy to control the venting direction to one side, and edge cooling may be performed through the surface that does not include the sealing portion, thereby securing cooling performance.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

Meanwhile, referring to FIG. 2, the battery module 10 of the present disclosure may further include a bus-bar frame assembly 500. The bus-bar frame assembly 500 may be provided inside the module case 300 and configured to cover at least one side of the plurality of battery cells 100. In the present embodiment, as shown in FIG. 2, the bus-bar frame assembly 500 may be coupled to the front and rear sides of the plurality of battery cells 100.

The bus-bar frame assembly 500 may include a bus-bar frame 510 and a plurality of bus-bars 520. The bus-bar frame 510 may be disposed to be coupled to the front and rear sides of the plurality of battery cells 100. The bus-bar frame 510 may have slits through which the electrode leads 120 of the battery cells 100 extend outward in the +Y-axis or -Y-axis direction. In addition, the bus-bar frame 510 may be formed of a material having electrical insulation, such as a plastic material, and configured such that the bus-bar 520 may be attached to the outer surface.

The plurality of bus-bars 520, as a means for connecting the battery cells 100 in series and/or in parallel, may be formed of a metal material, such as copper, aluminum, nickel, etc., and may be configured in the shape of bars. The electrode leads 120 of the battery cells 100 may pass through the slits of the bus-bar frame 510 and to extend outside the bus-bar frame 510, and the extended portions may be attached to the surface of the bus-bar 520 by welding or the like.

The barrier 200 may be provided between the battery cells 100. At least one barrier 200 may be provided in at least one battery module 10. A plurality of barriers 200 may be provided along one direction in which the battery cells 100 are arranged. The barrier 200 may be disposed such that one or more battery cells 100 are interposed therebetween.

In particular, the barriers 200 may be configured to partition the plurality of battery cells 100. The barriers 200 may be configured to group the plurality of battery cells 100. For example, as shown in FIG. 3, the barriers 200 may be disposed for every four battery cells 100, thereby grouping the battery cells 100 in groups of four.

The barrier 200 may be provided as an insulating pad that is thinner than the battery cells 100. The barrier 200 may be formed of a material having excellent heat resistance and/or fire resistance. Alternatively, the barrier 200 may be configured in the form of a compressible pad made of, for example, a material such as silicone or aerogel.

According to the above-implemented configuration of the present disclosure, the battery cells 100 may be partitioned or divided to prevent gas or flames from spreading to another barrier 200 adjacent to the barrier 200. In addition, according to the above-implemented configuration of the present disclosure, the barrier 200 may contribute to the structural rigidity of the battery cells 100 by compressing the battery cells 100 when the battery cells 100 swell.

The module case 300 may be configured to store the plurality of battery cells 100 and the barrier 200. Specifically, the module case 300 may have an inner space formed therein, and store the plurality of battery cells 100 and the barrier 200 in the inner space.

Considering the convenience of assembly or assembly tolerance, the barrier 200 may be provided to be spaced a predetermined distance apart from one side of the module case 300. In such a case, if a thermal event occurs in one battery cell 100, venting gas or flames are likely to spread to another adjacent battery cell 100 through the predetermined gap formed between the barrier 200 and the module case 300.

Therefore, the battery module 10 according to an embodiment of the present disclosure may have a protrusion P. The protrusion P may be provided on one side of the module case 300. For example, although the embodiment illustrated in FIG. 3 shows the protrusion P provided on the upper side of the module case 300, the position of the protrusion P is not limited thereto.

The protrusion P may be configured such that at least a portion thereof protrudes from one side of the module case 300 toward the barrier 200. The protrusion P may be configured to minimize the gap between the module case 300 and the barrier 200. Accordingly, the battery cells 100 may be partitioned not only by the barriers 200 but also by the protrusions P.

In addition, even if a thermal event occurs in any of the battery cells 100 grouped by the barriers 200, the venting gas, flames, and/or particles may be suppressed from moving to other groups of battery cells 100 by the protrusions P. To this end, the protrusion P may be made of a material with excellent heat resistance and/or fire resistance so that it does not deform even at high temperatures and high pressures and maintains a sealed structure.

According to the above-implemented configuration of the present disclosure, the battery cells 100 may be reliably partitioned and separated. Accordingly, when a thermal event occurs in a battery cell 100, venting gas or flames may be prevented from being transferred to an adjacent battery cell 100, thereby effectively preventing or delaying thermal runaway propagation between the battery cells 100. Therefore, the safety and reliability of the battery module 10 may be ensured.

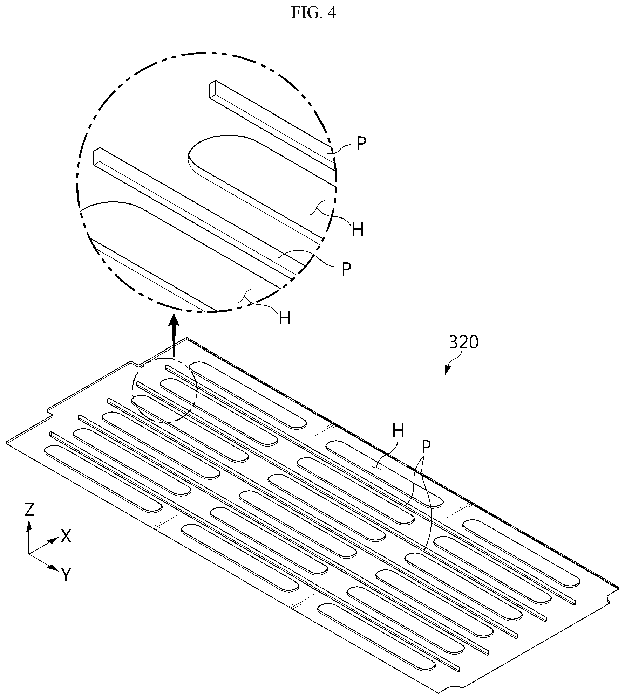

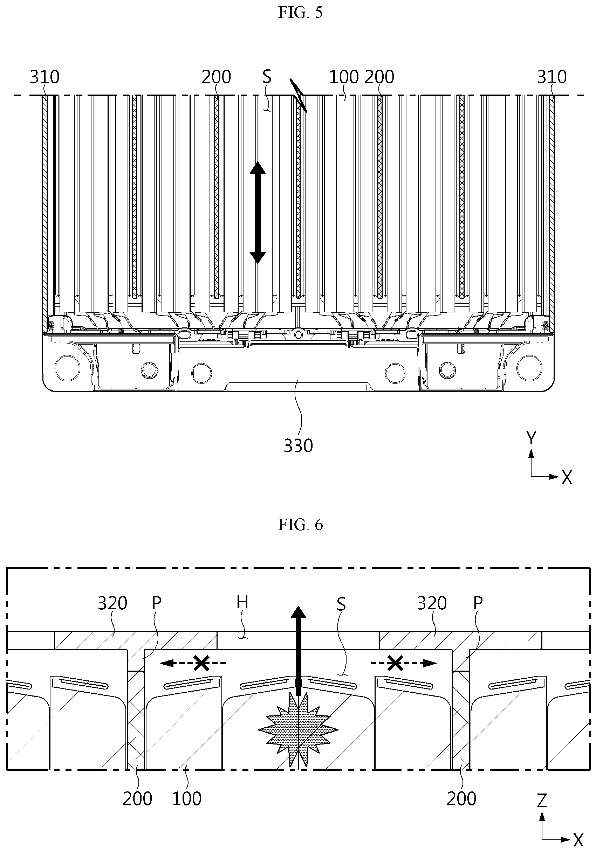

FIG. 4 is a bottom perspective view of a top plate included in a battery module according to an embodiment of the present disclosure, and FIG. 5 is a cross-sectional view of a battery module when viewed from above according to an embodiment of the present disclosure.

Referring to FIG. 4 in addition to FIG. 2, the module case 300 may include a case body 310 and a top plate 320. The case body 310 may be configured to have at least one opening. For example, the case body 310 may be configured to have upper, front, and rear openings. That is, the case body 310 may be configured as a U-frame.

The case body 310 may be configured as a metal material having rigidity and heat resistance in order to physically or chemically protect the stored battery cells 100.

The top plate 320 may be configured to form the upper side of the module case 300. The top plate 320 may be coupled to the case body 310 so as to cover the upper opening thereof. The top plate 320 may be welded to the case body 310. In this case, a square tube having front and rear openings may be obtained by coupling of the top plate 320 and the case body 310.

The module case 300 may include an end plate 330 provided on the front and rear openings of the case body 310. The end plate 330 may be welded to the case body 310. Although it is not shown for convenience, the end plate 330 may be configured such that, for example, an inner surface is made of an insulating material and an outer surface is made of a metal material. In addition, the end plate 330 may be partially provided with holes or slits for exposing components that are required to be exposed to the outside, such as a positive electrode terminal and negative electrode terminal or a connector of the battery module 10.

In addition, the module case 300 may be configured in various other forms. For example, the module case 300 may include a box-shaped lower case having an upper opening, and an upper cover configured to cover the upper opening of the lower case.

In this case, as disclosed in the embodiment illustrated in FIG. 4, the protrusion P may be formed on the top plate 320. The protrusion P may be provided on the lower surface of the top plate 320. High-temperature gas such as venting gas or flames generated from the battery cell 100 has a strong tendency to rise and may head toward the empty space provided at the top of the battery cells 100. According to the above-implemented configuration of the present disclosure, since the protrusion P is provided at the top of the battery cell 100, the heat such as venting gas or flames may be minimized from heading toward other battery cells 100.

In addition, since the protrusion P is provided inside the battery module 10, it does not increase the height of the battery module 10 and does not cause changes in the exterior of the battery module 10. Thus, according to the above-implemented configuration of the present disclosure, the energy density of the battery module 10 may be prevented from being affected.

A plurality of protrusions P may be provided along one direction. The one direction may be defined as the direction in which the barriers 200 and the battery cells 100 are arranged, that is, the left-right direction (parallel to the X-axis).

In addition, referring to FIG. 4 and FIG. 5, the protrusion P may be configured to extend along the longitudinal direction (front-back direction) of the barrier 200. That is, the protrusion P may be configured to extend along the longitudinal direction of the top plate 320. The protrusion P may be provided to correspond to the length of the barrier 200.

According to the above-implemented configuration of the present disclosure, both sides of the battery cell 100 may be blocked by the protrusions P and the barriers 200, thereby preventing gas or the like from moving.

The protrusion P may be formed integrally with the top plate 320. That is, the protrusion P may be provided integrally on the lower surface of the top plate 320. Specifically, the top plate 320 may be extruded so that the protrusion P is integrated with the top plate 320. As the top plate 320 is extruded, the protrusion P may be formed to extend in a straight line along the extrusion direction (Y-axis direction in FIG. 4).

According to the above-implemented configuration of the present disclosure, since the protrusion P is integrally provided with the top plate 320, the process of coupling the protrusion P to the top plate 320 may be omitted, and defects at the coupling portion of the protrusion P and the top plate 320 may be minimized.

FIG. 6 is an enlarged view of part A in FIG. 3, which illustrates a structure of a protrusion included in a battery module according to an embodiment of the present disclosure.

One side of the module case 300, that is, the top plate 320, and the barrier 200 may be provided to be spaced a predetermined distance apart from each other. Specifically, the barrier 200 may be configured to extend further outward, for example, upward, than the battery cell 100. The barrier 200 may be configured to extend further upward than the receiving portion of the battery cell 100. That is, the vertical height of the barrier 200 may be configured to be greater than the vertical height of the battery cell 100.

According to the above-implemented configuration of the present disclosure, the barrier 200 may more reliably partition the battery cells 100 and block the movement of venting gas or flames.

Referring to FIG. 6, the protrusion P may be configured to be in contact with the barrier 200. The protrusion P may at least partially be in contact with the upper surface or side surface of the barrier 200.

According to the above-implemented configuration of the present disclosure, since the gap between the barrier 200 and the top plate 320 is minimized, the space in which the venting gas may flow may be reduced, thereby preventing thermal runaway propagation to other adjacent battery cells 100.

Referring to FIGS. 4 and 6, as the protrusion P comes into contact with the barrier 200, a sealed space S may be formed by the barriers 200, the protrusions P, and the module case 300, which are adjacent to each other. Here, "sealing" indicates restricting the venting gas from moving between the battery cells 100 that are adjacent to each other in the left-right direction (X-axis direction), based on one barrier 200 therebetween. This sealed space S may be configured to prevent gas or the like generated from the battery cell 100 from moving toward another battery cell 100.

In particular, as disclosed in the embodiment illustrated in FIG. 6, the protrusion P may be configured so that the lower surface thereof comes into contact with the barrier 200. That is, the protrusion P may come into surface contact with the barrier 200. In the case where the protrusion P extends along the longitudinal direction of the barrier 200, the protrusion P and the barrier 200 may be configured to come into surface contact with each other in a straight line. In this case, the length of the protrusion P protruding from the top plate 320 may be configured to be equal to the gap between the barrier 200 and the top plate 320.

According to the above-implemented configuration of the present disclosure, in the case where the top plate 320 is coupled to the case body 310, the lower surface of the protrusion P and the upper surface of the barrier 200 may come into close contact with each other. Furthermore, since the barrier 200 has compressibility, it may come into closer contact with the protrusion P. As a result, the space S may be further sealed, so that the movement of venting gas or flames beyond the protrusion P may be further suppressed.

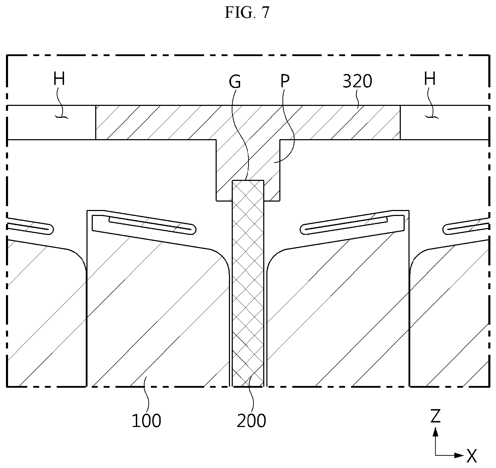

FIG. 7 is a drawing illustrating a structure of a protrusion included in a battery module according to another embodiment of the present disclosure.

In another embodiment, in order to improve the fixing strength between the protrusion P and the barrier 200, the protrusion P may be configured such that the end of the barrier 200 is inserted thereinto.

More specifically, referring to FIG. 7, the protrusion P may have a fixing groove G formed to be at least partially recessed. The barrier 200 may be inserted into the fixing groove G. Accordingly, the upper end of the barrier 200 may be in close contact with the fixing groove G without a gap.

According to the above-implemented configuration of the present disclosure, since the barrier 200 may be inserted into the protrusion P and supported from both sides, the fixing strength between the barrier 200 and the protrusion P may be further improved. As a result, the arrangement state of the battery cell 100 and the barrier 200 may be stably maintained.

In addition, the sealing power between the end of the barrier 200 and the protrusion P of the top plate 320 may be stably secured. Therefore, according to the above-implemented configuration, the plurality of battery cells 100 may be more reliably separated, so that the thermal propagation prevention performance between the battery cells 100 may be further improved.

Furthermore, according to the above-implemented configuration of the present disclosure, it is possible to reduce the possibility that the high-temperature and high-pressure venting gas or flames pushes out the barrier 200 or that the barrier 200 is bent and deformed by the internal pressure of the venting gas, thereby causing the heat to transfer to another battery cell 100. Therefore, when the thermal runaway propagation occurs in the battery module 10, the thermal runaway propagation between the battery cells 100 may be effectively prevented or delayed.

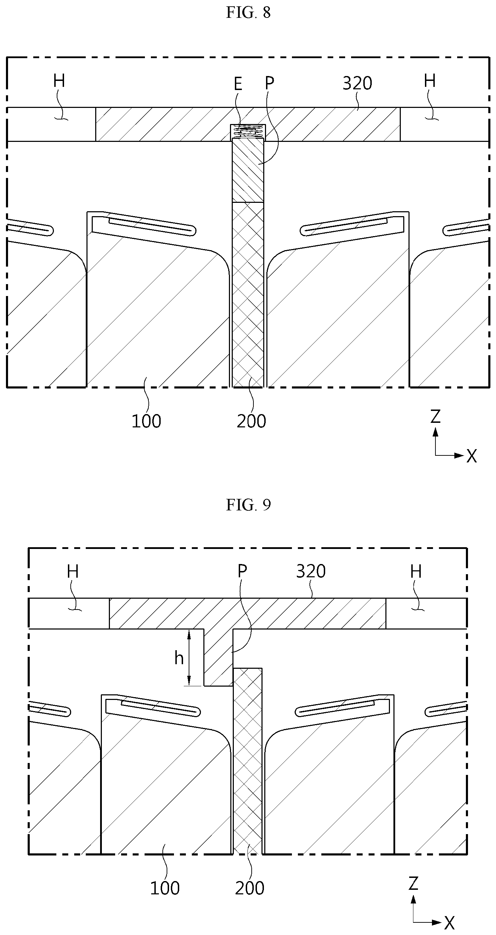

FIG. 8 is a drawing illustrating a structure of a protrusion included in a battery module according to another embodiment of the present disclosure.

As another embodiment, an elastic member E may be provided between the module case 300 and the protrusion P. The elastic member E may be configured as an elastic body having elasticity, such as a spring or a block. The elastic member E may be provided at an inner end of the protrusion P facing the module case 300. For example, the elastic member E may be provided at a portion where the top plate 320 and the protrusion P come into contact with each other.

The elastic member E may be compressed by a force applied in a direction in which the top plate 320 moves toward the case body 310 as the top plate 320 is coupled to the case body 310. According to the above-implemented configuration of the present disclosure, the contact between the protrusion P and the barrier 200 may be improved. In addition, the protrusion P may be in close contact with the barrier 200, regardless of the length of the protrusion from one side of the module case 300. That is, even if there is a gap between the protrusion P and the barrier 200 due to the tolerance during the manufacturing of the battery module 10, the protrusion P may be in contact with the barrier 200 to form a sealed space S.

FIG. 9 is a drawing illustrating the structure of the protrusion included in the battery module according to another embodiment of the present disclosure.

The protrusion P may be configured so that the side surface is in contact with the barrier 200. That is, as disclosed in the embodiment illustrated in FIG. 9, the protrusion P may be configured to partially overlap the barrier 200 in the arrangement direction (left-right direction) of the protrusion P and/or the barrier 200. The outer end of the protrusion P may be configured to come into surface contact with the upper end of the barrier 200. In this case, the protruding length h of the protrusion P from the top plate 320 may be configured to be greater than the gap between the barrier 200 and the top plate 320.

According to the above-implemented configuration of the present disclosure, when the top plate 320 is coupled to the case body 310, the side surface of the protrusion P and the upper side surface of the barrier 200 may come into close contact with each other. As a result, the distance that venting gas or flames must travel to pass over the protrusion P may increase further. Therefore, when thermal runaway propagation occurs in the battery module 10, thermal runaway propagation between the battery cells 100 may be effectively prevented or delayed.

In addition, according to the above-implemented configuration of the present disclosure, since the protrusion P is supported by the barrier 200, it is possible to reduce the possibility that high-temperature and high-pressure venting gas or flames push out the barrier 200 or that the barrier 200 is bent and deformed by the internal pressure of the venting gas. Therefore, the mechanical stability or bonding strength of the battery module 10 may be secured.

Although FIG. 9 shows an embodiment in which the protrusion P is provided on the left side of the barrier 200, the protrusion P may be provided on the right side of the barrier 200.

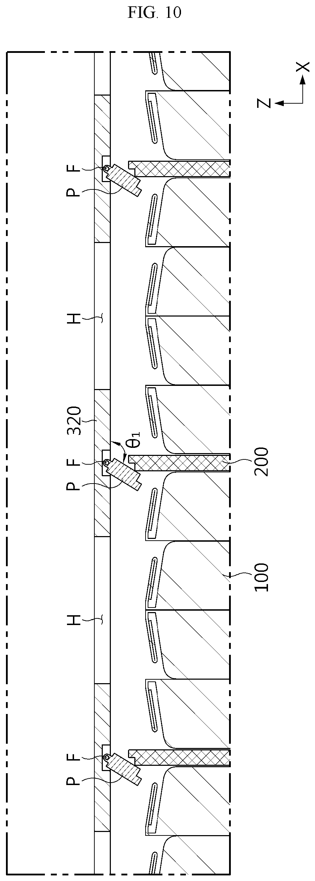

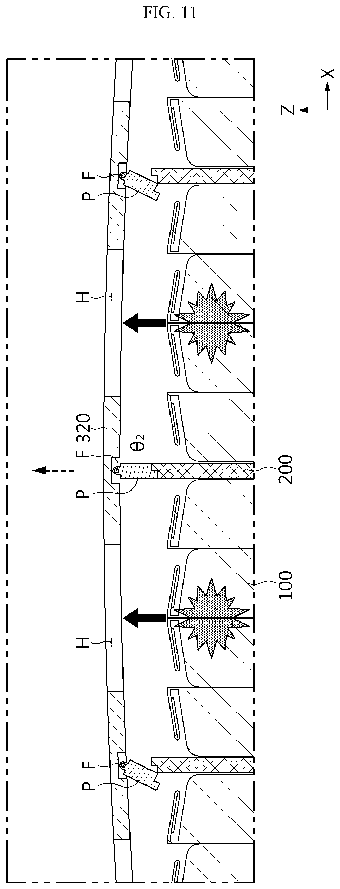

FIGS. 10 and 11 are drawings illustrating a structure of a protrusion included in a battery module according to another embodiment of the present disclosure.

As another embodiment, as disclosed in the embodiment illustrated in FIG. 10, the protrusion P may be configured to protrude diagonally toward the barrier 200. Specifically, the protrusion P may be configured to form a predetermined angle θ₁ with the top plate 320. The angle θ1 may be an obtuse angle. Accordingly, the side surface of the protrusion P may be configured to be in contact with the barrier 200, specifically, in line contact with the upper end of the barrier 200.

According to the above-implemented configuration of the present disclosure, since the protrusion P is supported by the barrier 200, the possibility of high-temperature and high-pressure venting gas or flames pushing out the barrier 200 may be reduced. As a result, the movement of flames, foreign substances, or high-temperature gases between the battery cells 100 may be more effectively prevented.

When thermal runaway occurs in the battery cell 100, the shape of the top plate 320 may be deformed by the pressure of the gas discharged from the battery cell 100 and/or the high heat of dust or flames. For example, the edges of the top plate 320 may be coupled and fixed to the case body 310, but the central portion of the top plate 320 may swell upward due to pressure such as gas or flames.

To prevent this, according to an embodiment of the present disclosure, contact between the protrusion P and the barrier 200 may be configured to remain even when the top plate 320 expands.

For example, as disclosed in the embodiment illustrated in FIG. 11, the protrusion P may be configured to be rotatable. Specifically, a hinge F may be provided at one end of the protrusion P. As the hinge F rotates, the protrusion P may rotate so that the angle θ₂ between the protrusion P and the top plate 320 may decrease. For example, the angle θ₂ between the protrusion P and the top plate 320 may be configured as an angle between a right angle and an obtuse angle.

As a more specific example, as disclosed in the embodiment illustrated in FIG. 11, when the top plate 320 expands, the protrusion P located at the central portion of the top plate 320 may be configured so that the lower surface thereof comes into contact with the upper surface of the barrier 200.

In this case, in order to prevent the protrusion P from moving over the barrier 200 to another battery cell 100, the protrusion P and the barrier 200 may be configured to interlock with each other. For example, the barrier 200 may have a stopper, and the protrusion P may be configured in a form corresponding to the shape of the stopper.

According to the above-implemented configuration of the present disclosure, even when the top plate 320 expands due to pressure such as venting gas or flames, contact between the protrusion P and the barrier 200 may remain. Accordingly, thermal runaway propagation to adjacent other battery cells 100 may be effectively prevented.

Furthermore, since the stopper is provided, the protrusion P may be supported by the barrier 200, thereby reducing the possibility in which the barrier 200 moves to the space where an adjacent battery cell 100 is located by the pressure of the venting gas or flames. Therefore, the movement of flames, foreign substances, or high-temperature gas between the battery cells 100 may be prevented more effectively.

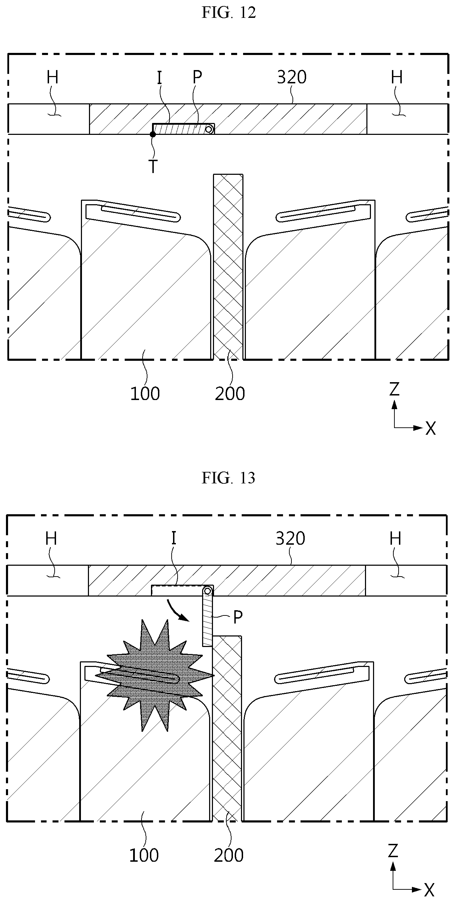

FIGS. 12 and 13 are drawings illustrating a structure of a protrusion included in a battery module according to another embodiment of the present disclosure.

Unlike the above embodiments, when thermal runaway does not occur in the battery module 10, the protrusion P may be configured not to come into contact with the barrier 200. For example, as disclosed in the embodiment illustrated in FIG. 12, the protrusion P may be configured to be inserted into the module case 300 and not to protrude outside the module case 300 in normal cases. More specifically, an insertion groove I capable of receiving the protrusion P in its inner space may be provided in the top plate 320. In this case, an adhesive member T may be provided at the end of the protrusion P. The adhesive member T may be provided between the protrusion P and the insertion groove I. As a result, the protrusion P may be fixed to the insertion groove I.

When thermal runaway occurs in the battery module 10, the protrusion P may come out of the insertion groove I and protrude toward the inner space of the module case 300. More specifically, as disclosed in the embodiment illustrated in FIG. 13, the protrusion P may have a hinge that is provided at one end to be rotatable. Accordingly, when thermal runaway occurs in the battery module 10, the adhesive member T may melt due to heat, so that the end portion of the protrusion P may be separated from the insertion groove I and rotated toward the lower surface of the top plate 320.

In addition, the protrusion P that is rotated and exposed to the outside of the module case 300 may come into contact with the barrier 200. In this case, as disclosed in the embodiment illustrated in FIG. 13, the protrusion P may be configured such that the side thereof comes into contact with the end side of the barrier 200. Alternatively, the lower surface of the protrusion P may come into contact with the upper surface of the barrier 200. As a result, the protrusion P may be operated only when thermal runaway occurs in the battery module 10, thereby partitioning and separating the battery cells 100.

According to the above-implemented configuration of the present disclosure, in the case where thermal runaway does not occur in the battery module 10, the heat generated dur to charging and discharging of the battery cell 100 may be prevented from freely moving and increasing the internal pressure. In addition, according to the above-implemented configuration of the present disclosure, when thermal runaway occurs in the battery module 10, the venting gas or flames may be prevented from moving to the space where the adjacent battery cell 100 is provided by the protrusion P. Accordingly, thermal runaway propagation between the battery cells 100 may be suppressed or blocked.

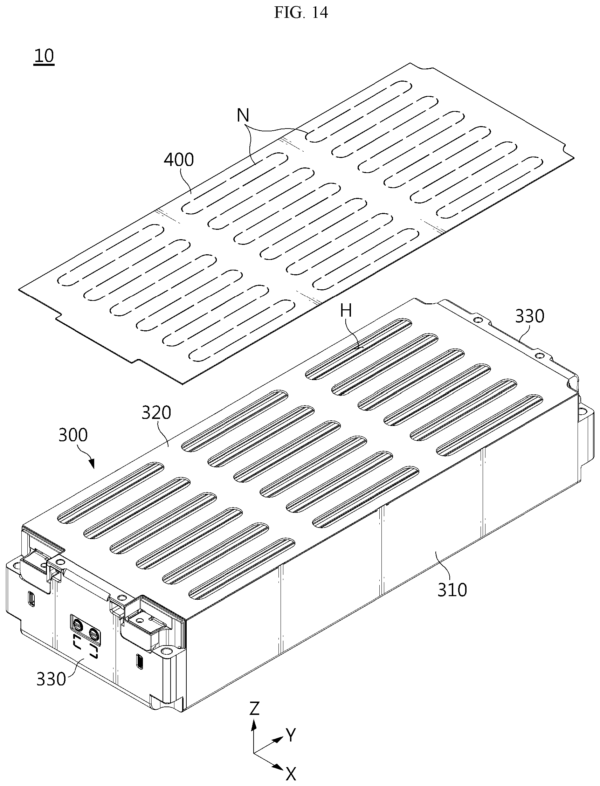

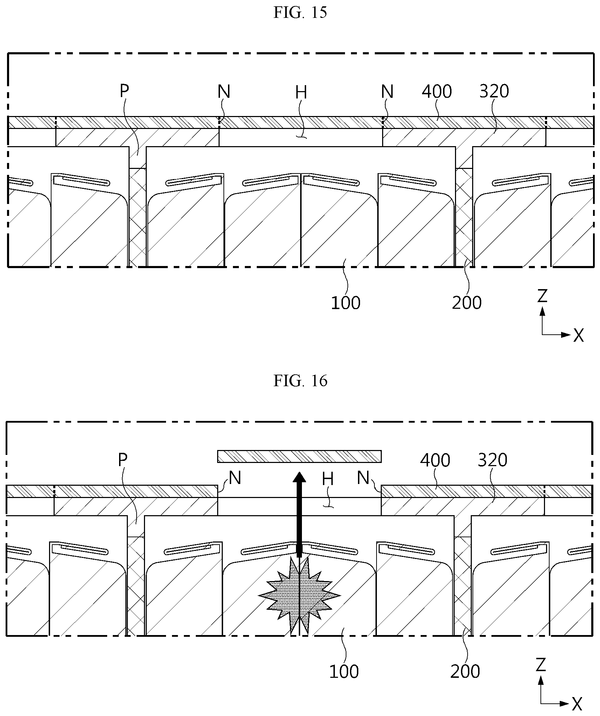

FIG. 14 is a drawing illustrating a cover member included in a battery module according to another embodiment of the present disclosure, and FIG. 15 is a cross-sectional view of a battery module according to another embodiment of the present disclosure. In addition, FIG. 16 is a drawing illustrating a state where a cover member is opened when a thermal event occurs in a battery module according to another embodiment of the present disclosure.

Referring to FIG. 14, a venting hole H may be formed in the module case 300. The venting hole H may be configured to discharge venting gas generated in the battery cell 100 to the outside of the module case 300. The venting hole H may be formed on a side where a protrusion P is located.

For example, as shown in FIG. 14, a protrusion P may be formed in the top plate 320, and the venting hole H may also be formed in the top plate 320. As a result, directional venting toward the top of the battery module 10 may be possible through the venting hole H.

Specifically, a plurality of venting holes H may be provided at regular intervals in the horizontal direction (X-axis and Y-axis directions).

The venting hole H may be located between the barriers 200. That is, the venting hole H may be provided above at least one battery cell 100 positioned between the adjacent barriers 200. For example, as illustrated in FIG. 3, barriers 200 may be disposed for every four battery cells 100, and a plurality of venting holes H may be formed in a row above the battery cells 100 positioned between the barriers 200 along the longitudinal direction (Y-axis direction) of the battery cells 100.

In this case, the protrusion P may be provided between the adjacent venting holes H among the plurality of venting holes H. That is, the venting hole H may be provided for each sealed space S. Accordingly, gas or flames emitted from the battery cells 100 stored between the adjacent barriers 200 may be discharged to the outside of the module case 300 only through the venting hole H located between the adjacent barriers 200 by the protrusions P.

According to the above-implemented configuration of the present disclosure, the sealed space S may be configured to communicate with the venting hole H, so that gas or the like generated from the battery cell 100 may be guided and discharged only toward the venting hole H (see the bold arrow in FIG. 6), instead of moving toward other battery cells 100. That is, since the surrounding area of the venting hole H is blocked, directional venting of gas may be more effectively induced in the upward direction. Accordingly, the internal pressure of the battery cell 100 where the thermal event occurred may increase, so that the gas may be preferentially discharged through the venting hole H above the battery cell 100. Therefore, according to the above-implemented configuration of the present disclosure, it is possible to shorten the time during which high-temperature venting gas or flames remain around the battery cell 100 where the fire occurred inside the battery module 10.

Referring to FIGS. 14 to 16, the battery module 10 according to an embodiment of the present disclosure may further include a cover member 400.

Referring to FIGS. 14 and 15, the cover member 400 may be configured to at least partially cover the module case 300. For example, it may be configured to cover the top plate 320. The cover member 400 may be provided on the outer side and/or inner side of the module case 300.

In particular, the cover member 400 may be configured to cover the venting hole H. In this case, the cover member 400 may be configured in a sheet shape and may be seated on the module case 300. The cover member 400 may be configured to cover all of the plurality of venting holes H.

The cover member 400 may be configured to suppress venting gas or flames, discharged when a thermal event occurs in the battery module 10, from spreading to another battery module 10. To this end, the cover member 400 may be made of a material having excellent heat resistance and/or fire resistance, such as a mica sheet or a silicone composite material.

Accordingly, the cover member 400 may maintain morphological stability without deformation even when high-temperature heat is generated, thereby stably blocking high-temperature gas or flames generated from the battery cell 100.

According to the above-implemented configuration of the present disclosure, since the cover member 400 is configured as a rigid and heat-resistant material, deformation due to high-temperature gas or flame may be minimized.

The cover member 400 may be configured to be at least partially openable by venting gas or flame, as disclosed in the embodiment illustrated in FIG. 16. Specifically, at least a portion of the cover member 400 may be configured to be ruptured by the pressure or heat of the venting gas moving toward the venting hole H. Alternatively, at least a portion of the cover member 400 may be configured to be completely separated.

To this end, the cover member 400 may have a notched portion N. The notched portion N may be configured to be opened by the venting gas, thereby discharging the venting gas to the outside of the battery module 10.

A plurality of notched portions N may be provided at regular intervals in the horizontal direction (X-axis and Y-axis directions). In particular, the notched portion N may be formed at a position corresponding to the venting hole H. In addition, the notched portion N may be configured in a shape corresponding to the venting hole H.

According to the above-implemented configuration of the present disclosure, when a thermal event occurs in a specific battery cell 100, the notched portion N provided on one side of the specific battery cell 100 may be ruptured to open at least one of the plurality of venting holes H. Accordingly, venting gas or the like may be discharged to the outside of the module case 300 through the opened venting hole H (see the bold arrow in FIG. 16).

In particular, the sealed space S may be further sealed by the protrusion P, the barrier 200, and the cover member 400, and the internal pressure of the sealed space S may increase due to venting gas or flames generated in the battery cell 100 where thermal runaway occurs. As a result, the cover member 400 (notched portion N) on the side of the battery cell 100 where the thermal event occurred may be preferentially opened, so that venting gas or flames may be quickly discharged to the outside of the battery module 10 through the venting hole H on the side of the battery cell 100 where the thermal event occurred.

In addition, the cover member 400 may prevent gas or flames discharged to the outside of the module case 300 from flowing back into the battery module 10. That is, the venting hole H provided on the side of the battery cell 100 where the thermal event did not occur may remain in a closed state without being opened. As a result, the venting gas or flames discharged to the outside through the opened venting hole H may be fundamentally blocked from flowing back into the battery module 10. In addition, the cover member 400 of the remaining portion that is not ruptured may block not only heat but also high-temperature gas, flames, or discharges generated from the battery cell 100.

That is, according to the above-implemented configuration of the present disclosure, when thermal runaway occurs in the battery module 10, not only may the venting gas or flames generated inside the battery module 10 be smoothly discharged to the outside of the battery module 10, but the discharged venting gas or flames may also be prevented from flowing back into the battery module 10. Therefore, the thermal runaway propagation may be effectively prevented or delayed by minimizing the thermal propagation to neighboring battery cells 100 or battery modules 10.

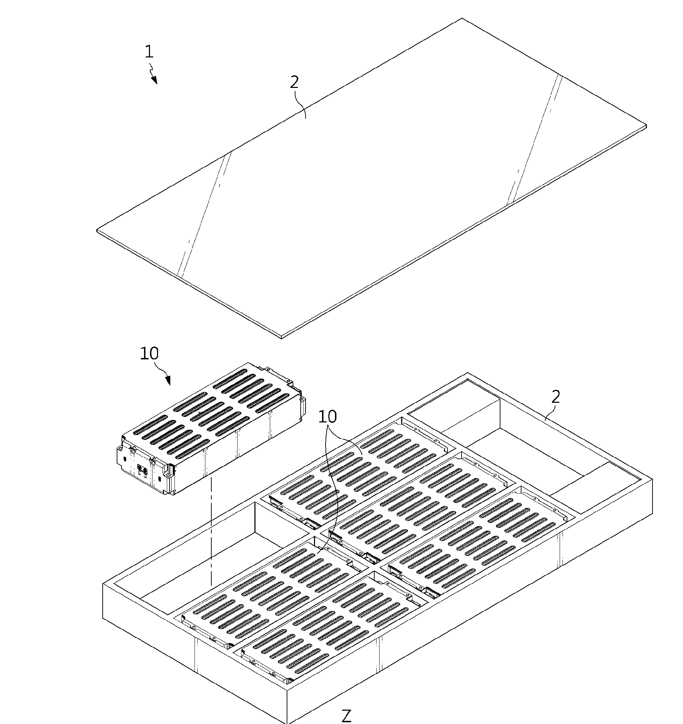

FIG. 17 is a schematic perspective view of a battery pack including a battery module according to an embodiment of the present disclosure.

Referring to FIG. 17, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, and a fuse for integrated control of charging and discharging of one or more battery modules, and components described above.

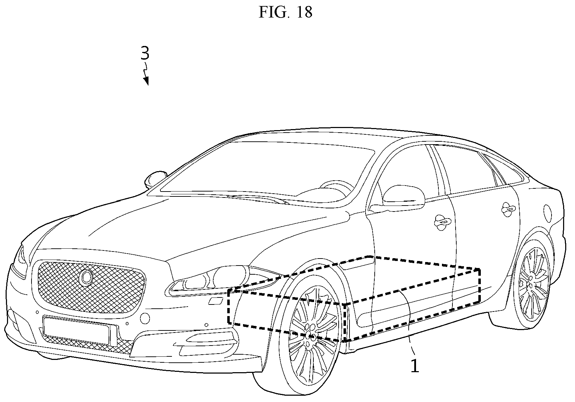

FIG. 18 is a schematic perspective view of a vehicle including a battery pack according to an embodiment of the present disclosure.

Referring to FIG. 18, a vehicle 3 according to an embodiment of the present disclosure may include one or more battery packs 1 according to an embodiment of the present disclosure or one or more battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by power supplied from a battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a barrier configured to partition the plurality of battery cells; and
a module case configured to store the plurality of battery cells and the barrier, and having a protrusion formed to protrude toward the barrier from at least a portion of one side thereof.

2. The battery module according to claim 1,
wherein the module case comprises
a case body having an upper opening, and
a top plate configured to cover the upper opening of the case body, and having the protrusion formed on a lower surface thereof.

3. The battery module according to claim 1,
wherein the protrusion is configured to extend along a longitudinal direction of the barrier.

4. The battery module according to claim 1,
wherein the barrier is configured to extend further outward than the battery cell.

5. The battery module according to claim 1,
wherein the protrusion is configured to come into contact with the barrier.

6. The battery module according to claim 1,
wherein as the protrusion comes into contact with the barrier, a sealed space is formed by the adjacent barriers, the protrusions, and the module case.

7. The battery module according to claim 1,
wherein the protrusion is configured such that its lower surface is in contact with the barrier.

8. The battery module according to claim 1,
wherein the protrusion is configured such that an end of the barrier is inserted thereinto.

9. The battery module according to claim 1,
wherein the protrusion is configured such that its side surface is in contact with the barrier.

10. The battery module according to claim 1,
wherein a venting hole is formed on a side of the module case where the protrusion is located.

11. The battery module according to claim 10,
wherein a plurality of venting holes are provided, and
wherein the protrusion is provided between the adjacent venting holes.

12. The battery module according to claim 10, further comprising
a cover member configured to cover the venting holes and to be at least partially openable by the venting gas.

13. The battery module according to claim 12,
wherein the cover member has a notched portion provided at a position corresponding to the venting hole.

14. A battery pack comprising at least one battery module according to any one of claims 1 to 13.

15. A vehicle comprising at least one battery module according to any one of claims 1 to 13.
